(19)

Europäisches
Patentamt

European
Patent Office

Office européen
des brevets

(11) **EP 4 367 024 B1**

(12) **EUROPEAN PATENT SPECIFICATION**

(45) Date of publication and mention
of the grant of the patent:
**20.08.2025  Bulletin 2025/34**

(21) Application number: **22737909.6**

(22) Date of filing: **06.07.2022**

(51) International Patent Classification (IPC):
**B64C 27/00** *(2006.01)*        **B64C 27/32** *(2006.01)*

(52) Cooperative Patent Classification (CPC):
**B64C 27/32; B64C 27/001;** B64C 2027/003

(86) International application number:
**PCT/EP2022/068703**

(87) International publication number:
**WO 2023/280903 (12.01.2023 Gazette 2023/02)**

(54) **ROTOR FOR HELICOPTER WITH IMPROVED DAMPING**

ROTOR FÜR HUBSCHRAUBER MIT VERBESSERTER DÄMPFUNG

ROTOR POUR HÉLICOPTÈRE À AMORTISSEMENT AMÉLIORÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **08.07.2021  IT 202100018017**

(43) Date of publication of application:
**15.05.2024  Bulletin 2024/20**

(73) Proprietor: **Politecnico di Milano
20133 Milano (IT)**

(72) Inventors:
• **MASARATI, Pierangelo
20155 Milano (IT)**
• **FRISON, Leonardo Antonio
20141 Milano (IT)**

(74) Representative: **Botti & Ferrari S.p.A.
Via Cappellini, 11
20124 Milano (IT)**

(56) References cited:
**EP-A1- 0 340 095      EP-A1- 0 424 267
EP-A2- 2 371 712      US-A- 3 361 216
US-A- 4 868 962**

**Description**

Technical field

The present invention relates to a rotor for helicopter having improved damping features and to a relevant helicopter which implements such rotor.

In general the present invention finds an application in the aeronautical field, particularly in the helicopter field, and even more particularly but not exclusively in the field of articulated helicopters.

Prior art

As it is well known in the specific technical field, in the design of a helicopter, one of the main points, if not the fundamental point, lies in the development of the rotor, which is the component providing the aircraft with the capacity to generate the necessary traction and propulsion as well as the forces and moments required to drive it.

The rotor head is a hub with the attachment points and mechanical connections which are able to control the inclination of a plurality of blades connected thereto.

The inclination of the rotor blades is changed to obtain the desired forces through the so-called "swashplate" by using the flight controls.

Due to the periodicity of the motions undergone by a rotor it forms a resonating system.

However this condition does not lead to destructive amplification effects up to force failure due to the presence of appropriate dampers, in particular at the drag hinge.

The latter, in particular, is a particular hinge whose axis is parallel to the rotation axis itself and it allows the blade to move back and forth in the rotation plane.

It is inserted to reduce the intensity of the loads transmitted to the hub, particularly with regard to the bending moment in the plane.

Nevertheless, when the helicopter rests on the landing gears it can perform a pitching/rolling movement for small oscillations extending and compressing the landing gear.

This movement can cause a drag movement of the blades with a resulting displacement of the overall centre of gravity of the rotor so that it no longer coincides with the geometric centre.

The two movements can couple causing a phenomenon amplification.

The present problem is called "ground resonance", and it consists, in other words, in a dynamic problem in which vibrations amplify rather than reduce.

In order to remedy these problems several systems have been developed, which generally provide the insertion of a damper for each blade and which acts on the drag rotation provided between the blade and the hub.

In particular, every time the blade undergoes a drag movement it activates the damper which dissipates the movement.

Since the drag movement of the blades is individually damped by the damping elements between each blade and the hub, the movement of all the blades is always damped, regardless of the contribution thereof to the movement of the centre of mass of the whole rotor.

The present solution is described, for example, in the patent application EP 1 767 452 B1, the damper being connected through a ball joint.

This solution solves the specific problem but it is not the most suitable in terms of stresses on the component since not all drag movements can cause a displacement of the centre of gravity of the hub, and thus they do not require a damping.

In fact, taking into consideration a four-blade rotor, the possible drag movements, or modes, are four: a collective mode, two cyclic modes and a reactionless mode. Of the four modes only the two cyclic ones can cause a movement of the centre of gravity and must thus be damped.

A possible alternative is to insert the damper between two adjacent blades, in a configuration referred to as "inter-blade" thus constraining the differential rotation between the two blades.

This solution was adopted, for example, in the US patent application US 2018/0002006 A1, the dampers being located at specific planes with respect to the rotor one.

The Swiss patent application CH 711,754 A2 also adopts this solution in combination with a plate element connected to the damper.

Nevertheless, in the "inter-blade" configuration only the differential movement between adjacent blades is damped, and thus the dissipation action will start only when the rotation of two neighbouring blades will not be the same.

Therefore, damping does not act on the collective mode but only on the two cyclic modes and on the reactionless mode.

In particular, the latter, although not affecting ground resonance, is particularly damped inserting considerable stresses on the component.

Furthermore, if on the one hand this configuration allows not to load the dampings with a same movement for all the blades, not involving a displacement of the centre of mass of the rotor, on the other hand other movements, which are different from blade to blade and which do not involve a displacement of the centre of mass of the rotor, are damped to an unnecessarily high extent.

US patent US 3,361,216 A proposes an alternative solution with a four-blade rotor in which opposite blades are connected and which actuates hydraulic dampers, but this solution is hardly feasible from a structural point of view due to the damper overlapping the components of the hub and of the shaft and to a very complex implementation thereof.

In view of the above, despite the presence of several systems aimed at solving the damping problem on the rotor, and particularly the ground resonance effect, there are still some drawbacks.

Summary of the invention

The object of the present invention is to remedy the drawbacks of the prior art.

In particular, an object underlying the present invention is to devise an optimum solution which is suitable for all drag modes.

A further object is to provide a solution which preserves the working life of the adopted components, avoiding detrimental overloads.

A further object of the present invention is to devise an efficient and strong system, which does not require an excessively frequent maintenance.

Finally, an object of the present invention is to reduce, together with stresses, also the size and thus the weights of the involved components.

The idea underlying the present invention is to provide a solution which allows a damping to be inserted in connection with the drag movement of the blades of a helicopter rotor, maximizing it for the movements requiring it and minimizing it or making it void for those not requiring it.

The above objects and other further objects are thus solved by a rotor for helicopter comprising a shaft adapted to be put into rotation by at least one engine element, a hub splined to the shaft, at least four blades radially connected to the hub and rotationally movable thereabout and at least one damping connection assembly provided between at least one first blade and at least one second blade of the at least four blades, the at least one first blade and the at least one second blade being radially non-adjacent, wherein radially non-adjacent means that said at least one first blade and said at least one second blade define each a radius of said rotor and said rotor comprise at least one third blade interposed between said at least one first blade and said at least one second blade which defines a third radius of said rotor.

The damping connection assembly comprises at least one upper connection rod arranged above the hub and connected to the first blade at a first end of the at least one damping connection assembly, at least one lower connection rod arranged below the hub connected to the second blade at a second end of the at least one damping connection assembly, and at least one damper element interposed between the first end and the second end.

Radially non-adjacent blades mean, in other words, in the present disclosure a pair of blades which, by taking into consideration the rotor disc, i.e. the disc described by the ends of the rotating blades with the traction which is perpendicular to the disc, define two different adjacent circular sectors with a common blade interposed therebetween.

In still other words, radially non-adjacent blades mean two blades which define each a radius of the rotor disc and comprise at least one third blade interposed therebetween which defines a third radius of the rotor disc.

Advantageously, the present solution allows the damping amount associated with movements involving a substantial displacement of the overall centre of mass of the rotor to be maximized and, at the same time, the damping associated with movements not involving a displacement of the overall centre of mass of the rotor to be minimized or even made void.

According to a preferred embodiment, the at least one damper element comprises a rotary damper, configured to generate a damping through a rotation by a fixed angle.

In this case, advantageously, the relative movement which produces the damping effect is the relative rotation between two parts forming the damper body.

Preferably, a plurality of bearings is provided, located between the hub and the at least one damper element and configured to allow a rotation of the damper element.

According to an alternative embodiment, the at least one damper element comprises a linear damper, configured to generate a damping by extension and compression.

In particular, according to a preferred and optimized embodiment the at least one upper connection rod or the at least one lower connection rod comprises the linear damper element.

In this case, the damper body is thus comprised in one of the two rods, at most entirely forming one of them.

Preferably, in this case a rotating body adapted to act as a rigid transmission element and a plurality of bearings located between the rotating body and the hub configured to allow a rotation of the rotating body are further provided.

**EP 4 367 024 B1**

The rotating body is thus advantageously adapted to convert the motion of translation imposed by one of the rods into the corresponding relative movement of translation between the two parts of the damper body.

Preferably, the at least one damper element comprises at least one elastomeric element adapted to generate a damping by deformation.

Advantageously, the present solution does not require to insert external dynamic seals.

As an alternative, the at least one damper element comprises at least one hydraulic element adapted to generate a damping through a viscous fluid.

Advantageously, the present solution allows to have a force which can be adjusted depending on operating conditions.

Nothing prevents from providing a hybrid damper, hybrid damper meaning a damper comprising both elastomeric components and hydraulic components and thus incorporating part of the advantages of both components.

Still preferably, the rotor according to the invention comprises four blades or five blades or six blades.

Preferably, only a third blade is provided, interposed between the at least one first blade and the at least one second blade which are radially non-adjacent.

Advantageously, for the present configurations there is a very low level of structural complexity with respect to the configurations currently provided by the prior art, in defiance of great advantages in terms of optimization of damping performances.

According to a further aspect the present invention provides a helicopter comprising a fuselage, at least one engine element and at least one rotor for helicopter according to the above description.

Advantageously, such helicopter is optimal from the point of view of functionality, weights and related costs since the required damping can be obtained with smaller and lighter damping elements.

Further features and advantages will become more apparent from the following detailed description of non-limiting preferred embodiments of the present invention, and from the dependent claims which outline preferred and particularly advantageous embodiments of the invention.

Brief description of the drawings

The invention is illustrated with reference to the following figures, given by way of non-limiting example, in which:

- Figure 1 illustrates a perspective schematic view of a rotor for helicopter according to a first embodiment of the present invention;

- Figure 2 illustrates a top schematic view of the rotor for helicopter of Figure 1;

- Figure 3 illustrates a perspective schematic view without the hub of the rotor for helicopter of Figure 1;

- Figure 4 illustrates a perspective schematic view without the blades of the rotor for helicopter of Figure 1;

- Figure 5 illustrates a top schematic view of Figure 4;

- Figure 6 illustrates a perspective schematic view without the hub of Figure 4;

- Figure 7 illustrates a perspective schematic view without the blades of an alternative of Figure 4;

- Figure 8 illustrates a top schematic view of Figure 7;

- Figure 9 illustrates a perspective schematic view without the hub of Figure 7;

- Figure 10 illustrates a perspective schematic view without the blades of a second embodiment according to the present invention;

- Figure 11 illustrates a top schematic view of Figure 10;

- Figure 12 illustrates a perspective schematic view without the hub of Figure 10;

- Figure 13 illustrates a perspective schematic view without the blades of an alternative of Figure 10;

- Figure 14 illustrates a top schematic view of Figure 13;

- Figure 15 illustrates a perspective schematic view without the hub of Figure 13;

- Figure 16 illustrates a perspective schematic view without the blades of a third embodiment of a rotor for helicopter according to the present invention;

- Figure 17 illustrates a top schematic view of Figure 16;

- Figure 18 illustrates a perspective schematic view without the hub of Figure 16;

- Figure 19 illustrates a perspective schematic view without the blades of a fourth embodiment of a rotor for helicopter according to the present invention;

- Figure 20 illustrates a top schematic view of Figure 19;

- Figure 21 illustrates a perspective schematic view without the hub of Figure 19.

In the various figures, identical elements will be identified by identical reference numbers.

Detailed description

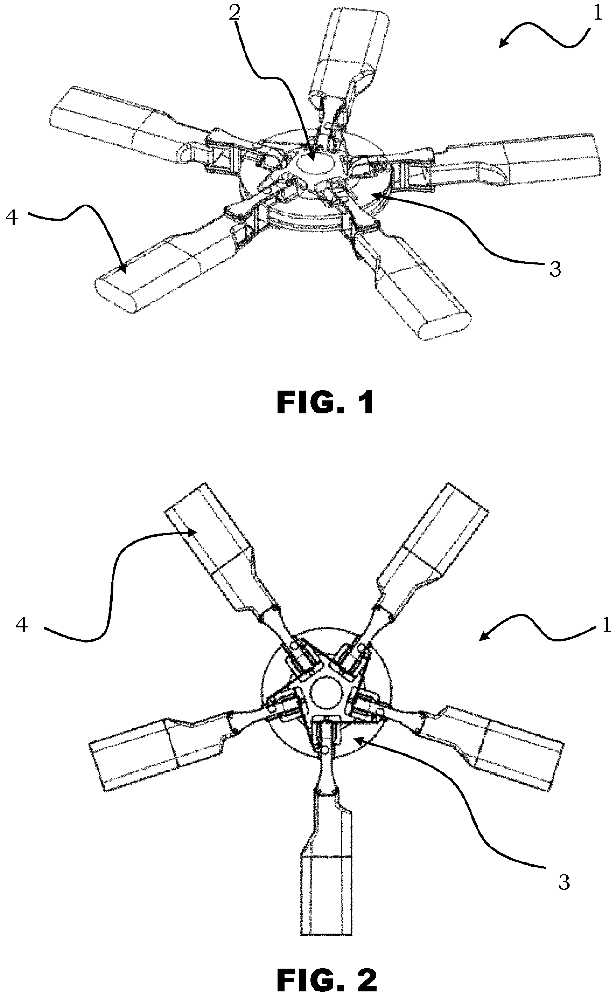

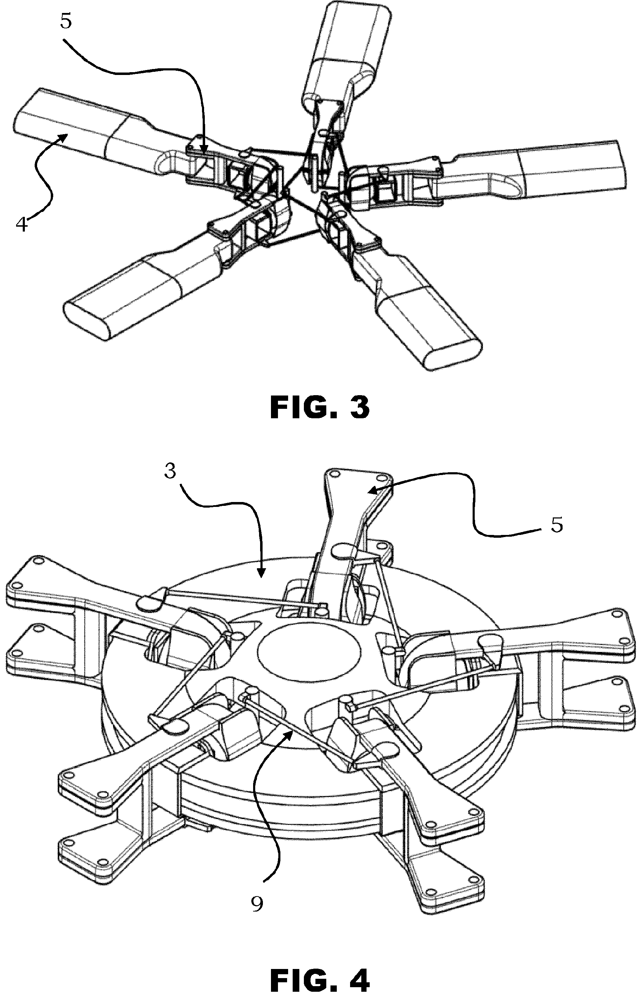

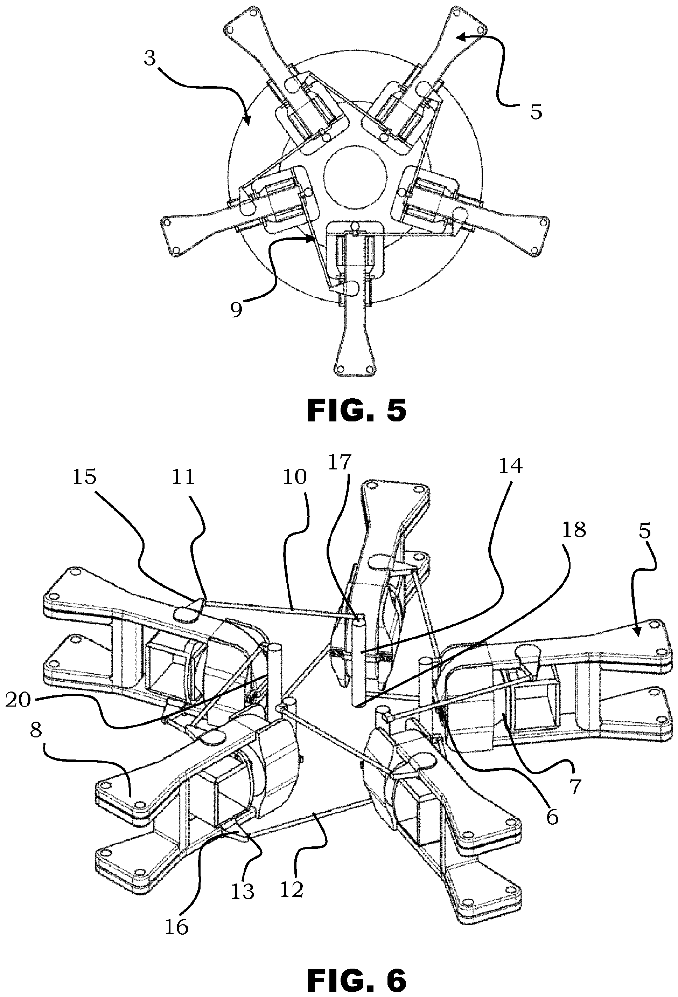

With reference to the attached Figures 1-6, a first embodiment of a rotor for helicopter made in accordance with the present invention is globally and schematically indicated with 1, hereafter called rotor 1 for the sake of brevity.
In particular, Figures 1-3 illustrate the whole rotor 1 in its entirety.
The rotor 1 comprises a shaft 2 adapted to be put into rotation by at least one engine element (not shown) and a hub 3 splined to the shaft 2.
A plurality of blades 4, in particular at least four blades 4, which are rotationally movable about the hub 3 are connected to the hub 3.
The blades 4 are each connected to the hub 3 through an attachment point 5.
In the present embodiment five blades are provided.
The relative movement between the air and the rotating blades 4, having a suitable plan shape, twist and aerodynamic airfoil allows lift to be generated and it allows translated flight conditions with very low speeds to be provided, up to the fixed-point flight condition with respect to the ground, or "hover", and which can be performed for considerable time periods, the vertical climbing and descent flight to be performed, including the vertical take-off and landing. The forward motion is instead obtained by rotating the rotor disc, i.e. the disc described by the ends of the rotating blades, with the traction which is perpendicular to the disc.
Furthermore, as it can be better seen in Figures 4-6 in which the blades 4 with only the relevant attachment points 5 have been removed for the sake of clarity.
At the attachment points 5 the presence of a flapping hinge 6, pitch variation hinge 7 and drag hinge 8 will be noticed for each one.
The present invention comprises a damping connection assembly 9, provided between at least two radially non-adjacent blades 4, comprising in turn at least one first blade and at least one second blade of the plurality of blades.
Radially non-adjacent blades mean in the present disclosure a pair of blades which, taking into consideration the rotor disc, define two different adjacent circular sectors with a common blade interposed therebetween.
In other words, radially non-adjacent blades mean two blades which define each a radius of the rotor disc and comprise at least one third blade interposed therebetween which defines a third radius of the rotor disc.
The damping connection assembly 9 comprises at least one upper connection rod 10 arranged above the hub 3 and connected to the first blade at a first end 11 of the damping connection assembly 9, at least one lower connection rod 12 arranged below the hub 3 and connected to the second blade at a second end 13 of the damping connection assembly 9 and at least one damper element 14 interposed between the first end 11 and the second end 13.
Specifically the first end 11 of the upper connection rod 10 is connected to an upper linking element 15 located at the attachment point 5 of the first blade and the second end 13 of the lower connection rod 12 is connected to a lower linking element 16 located at the attachment point 5 of the second blade which is not adjacent to the first one.
The damper element 14 is interposed between the first end 11 and the second end 13, as mentioned.
By inserting the damper element 14 between two non-adjacent blades thus constraining the relative rotation thereof, the damping moments is:

$$M_\xi = C_i \left( \dot{\xi}^{(m)} - \dot{\xi}^{(m-2)} \right) + C_i \left( \dot{\xi}^{(m)} - \dot{\xi}^{(m+2)} \right)$$

The represented embodiment provides that each blade 4 is connected to another blade 4 which is not adjacent thereto according to the previous definition of non-adjacency of the blades.

Due to the repetitiveness and the circular symmetry of the rotor 1, each damper element 14 is connected to two non-adjacent blades 4, and each blade 4 is connected to the two non-adjacent blades 4 through two damper elements 14, one for each connection.

Nevertheless, in particular cases and depending on specific requirements nothing prevents from providing a hybrid configuration in which the solution according to the present invention is adopted only between two non-adjacent blades 4 and another damping system is adopted concurrently for the other blades 4, this solution falling within the scope of protection defined by the attached claims.

The configuration according to the invention makes a damping of the drag movement in the rotor 1, but inserting this damping mainly or exclusively for the overall movements of the blades requiring it.

The desired effect is obtained, as mentioned, arranging for the damper element 14 to act on the relative drag movement between the non-adjacent blades 4.

The drag movement of a blade 4, that is the rotation of the blade 4 itself with respect to the hub 3, about an axis which is parallel to the rotor axis, is transferred to the damper element 14 through the upper connection rod 10.

Likewise, the movement of another blade 4 which is not immediately adjacent to the first one is transferred to the same damper element 14 through the lower connection rod 13.

Therefore, concordant movements having the same amplitude, which do not require damping, do not involve a relative movement on two portions of the damper element 14, while discordant movements, most of which require damping, produce the relative movement, thus resulting in a stress which acts on both blades connected to the single damper element 14.

The arrangement of the upper connection rod 10 and of the lower connection rod 12 to the damper elements 14 alternately the one below and the other above the hub 3, or vice versa, allows the risk of interference between the rods inducing the movement in the damper elements 14 to be eliminated.

In the embodiment represented in the mentioned Figures 1-6 each damper element 14 comprises a rotary damper, configured to generate a damping through a rotation by a fixed angle, having a cylindrical shape. The damper element is of the elastomeric type adapted to generate a damping by deformation, the damping torque depending on the elastomer.

In this case the upper connection rod 10 is comprised between the upper linking element 15 of a blade and the upper end 17 of the damper element 14, located close to the immediately adjacent blade, i.e. the blade comprised between the non-adjacent blades connected through the damping connection assembly 9.

The lower connection rod 12 is instead comprised between the lower linking element 16 of the non-adjacent blade and the lower end 18 of the damper element 14.

Thus, the relative movement which produces the damping effect is the relative rotation between the upper portion and the lower portion which form the damper element body 14.

The two portions of the damper 14 are connected to the hub 3 by a plurality of bearings 20 which allow the rotation thereof.

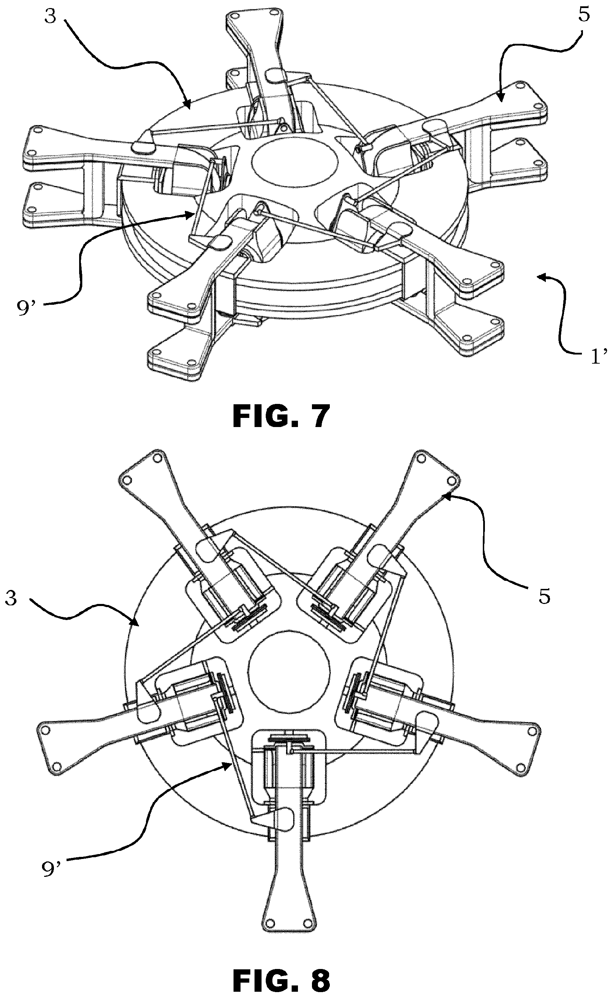

An alternative of the above-described rotor 1 can be seen in Figures 7-9, in which a rotor 1' is provided, comprising a damping connection assembly 9' which provides a different damper element 14', in this case too of the elastomeric type.

The damper element 14' has a substantially elliptical shape, rotating about a central fixed point located on the blade at which the damper element 14' is provided, i.e. the blade comprised between the non-adjacent blades connected through the damping connection assembly 9'.

Nothing clearly prevents from adopting a different conformation of the damping element 14' which is adapted to provide the same function.

Such damping element 14' thus provides an upper end 17' and a lower end 18' at which the upper connection rod 10 and the lower connection rod 12 are respectively connected, similarly to what is seen in the previous embodiment.

In this case too, the relative movement which produces the damping effect is the relative rotation between the upper portion and the lower portion of the damper element 14'.

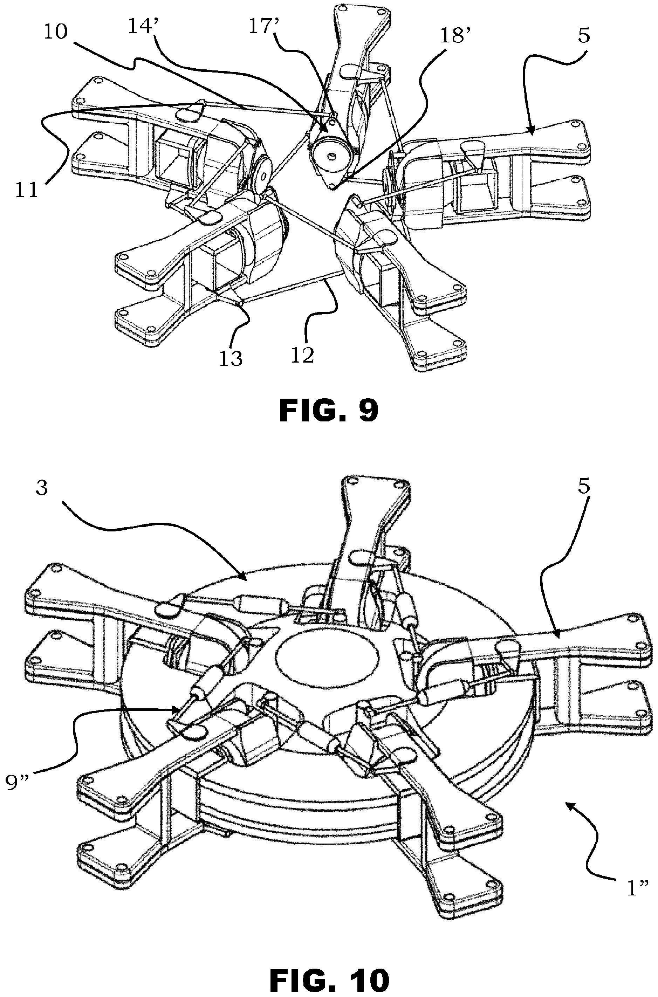

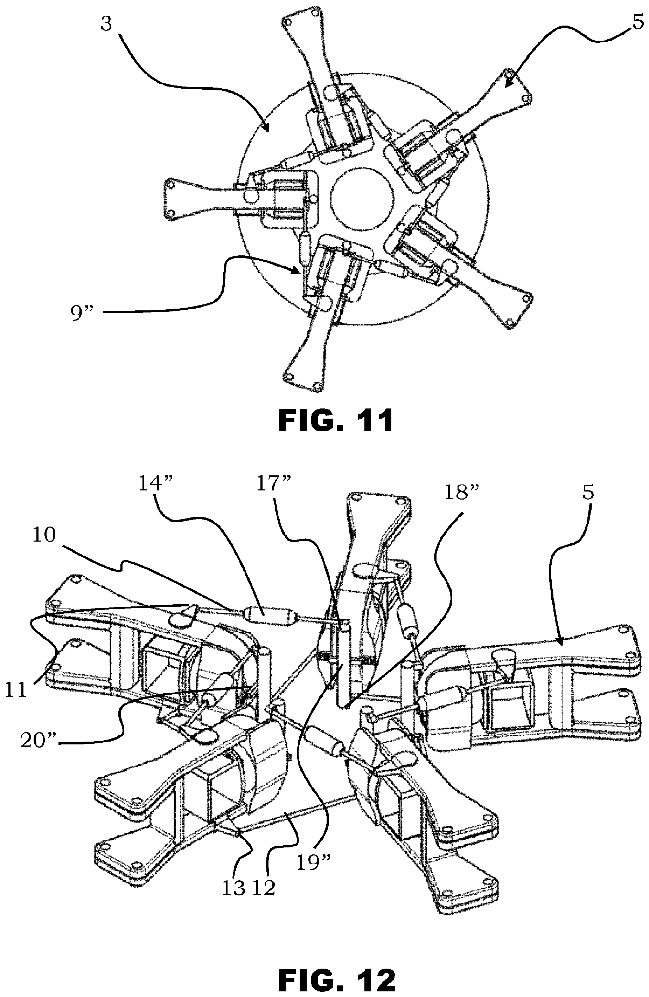

According to a second embodiment, shown in Figures 10-12, a rotor 1" is provided in a different way, comprising a damping connection assembly 9" which provides a damper element 14" of the linear type, configured to generate a damping by extension and compression. In this embodiment too an elastomeric damper has been adopted by way of example, the compression force depending on the elastomer.

The present embodiment of the damping connection assembly 9" has a conformation which is similar to that of the first embodiment represented in Figures 1-6, but unlike the latter the damper element 14" is comprised in the upper connection rod 10, and at most the upper connection rod 10 is entirely formed by the damper element 14".

Instead of the damper 14 a cylindrical rotating body 19" is thus provided, connected to the hub 3 by bearings 20" which allow the rotation thereof and which provides an upper end 17" and a lower end 18" at which the upper connection rod 10 and the lower connection rod 12 are respectively connected.

The cylindrical rotating body 19" plays the role of a rigid transmission adapted to convert the motion of translation imposed by the lower connection rod 12 into the corresponding relative movement of translation of the damper element 14" comprised in the upper connection rod 10.

Nothing prevents from providing in a different way the damper element 14" in the lower connection rod 12, with the effect that it is clearly mirrored.

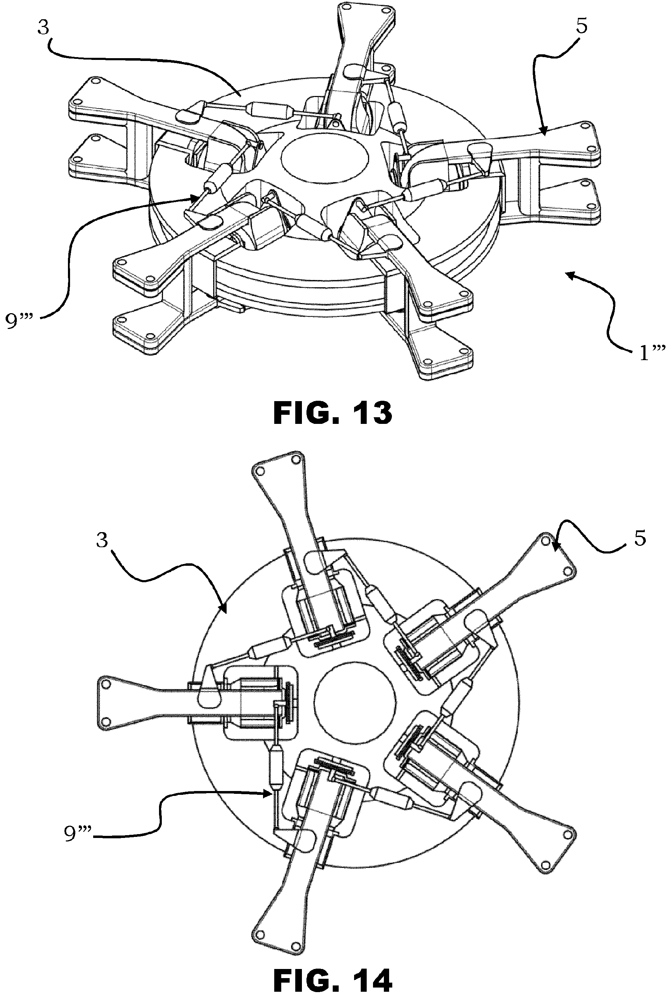

An alternative of the second embodiment is provided in Figures 13-15, with a rotor 1‴ comprising a damping connection assembly 9‴ which provides a different rotating body 19"'.

The rotating body in this case is shaped as the damper element 14' of the alternative represented in Figures 7-9.

In this case too, the damper element 14" is comprised in the upper connection rod 10 and the rotating body 19"', which provides an upper end 17‴ and a lower end 18"', plays the role of a rigid transmission adapted to convert the motion of translation imposed by the lower connection rod 12 into the corresponding relative movement of translation of the damper element 14" comprised in the upper connection rod 10.

In this case too, moreover, nothing prevents from providing the damper element 14" in a different way in the lower connection rod 12, with the effect that it is clearly mirrored.

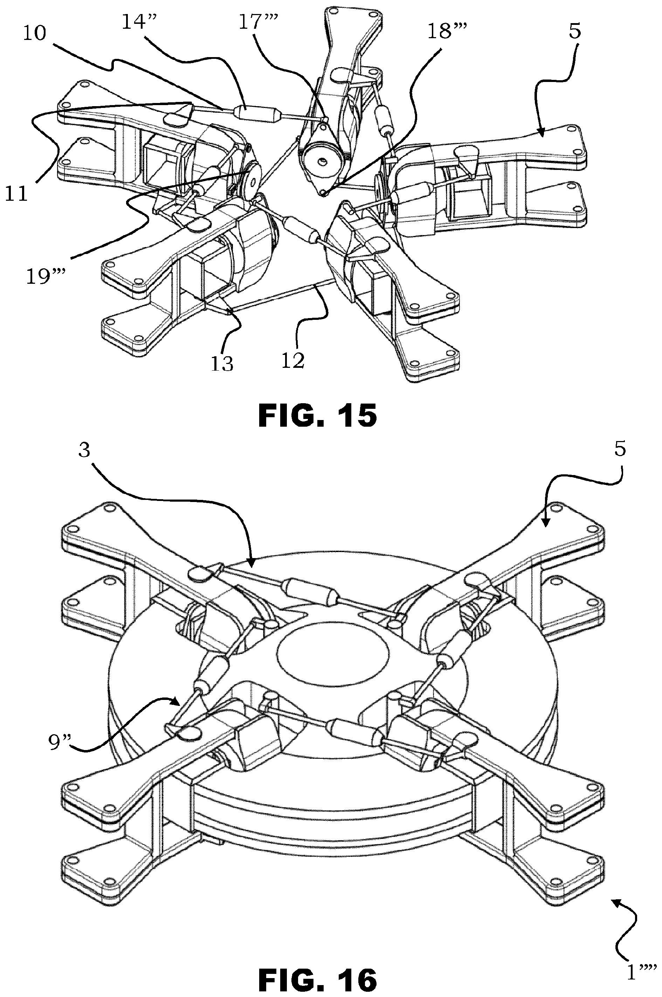

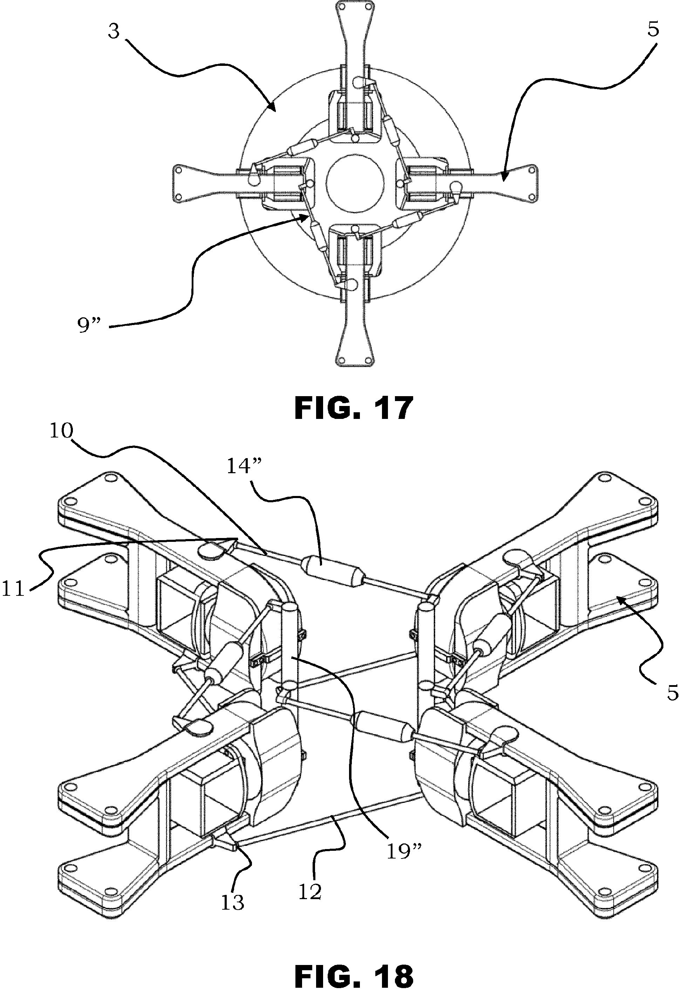

A third embodiment of a rotor 1⁗, which is different from the previous embodiments and alternatives since it comprises four blades 4, is represented in Figures 16-18.

The adopted damping connection assembly is the damping connection assembly 9" represented in Figures 10-12, but nothing prevents from adopting one of the other connection assemblies 9, 9', 9‴ being represented.

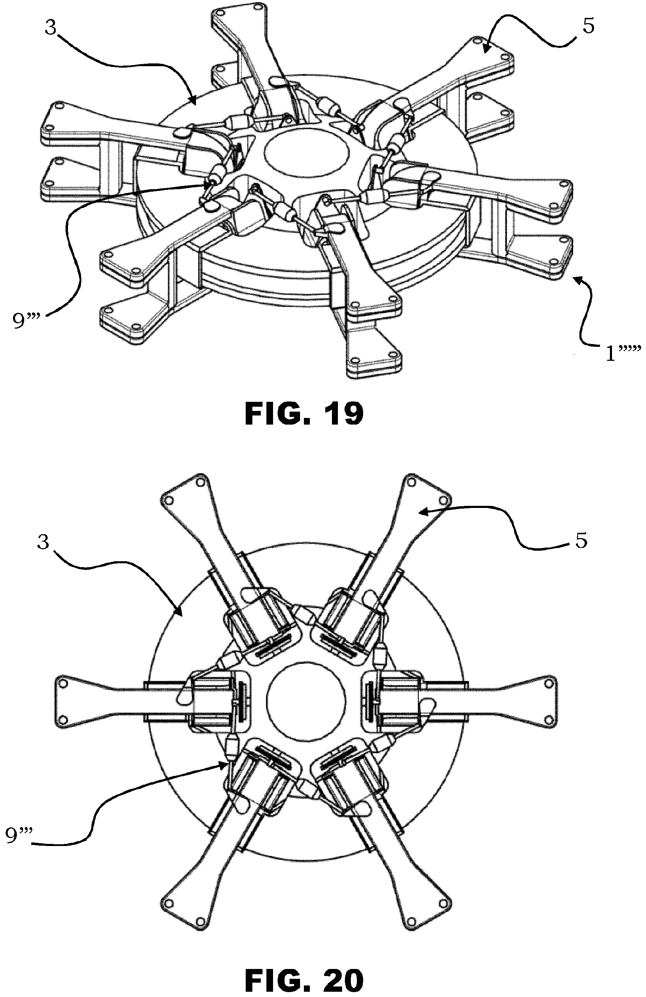

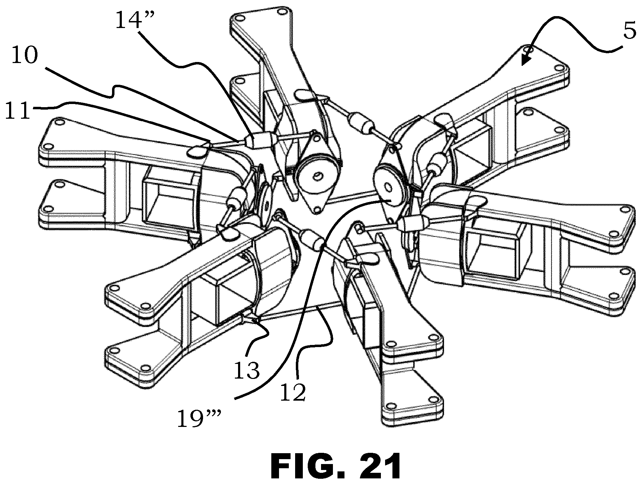

A fourth embodiment of a rotor 1⁗′, which is different from the previous embodiments and alternatives since it comprises six blades 4, is represented in Figures 19-21.

The adopted damping connection assembly is the damping connection assembly 9‴ represented in Figures 13-15, but nothing prevents from adopting one of the other connection assemblies 9, 9', 9' being represented.

Furthermore, in order to achieve an advantage due to the higher ease of interconnections between non-adjacent blades in the above-described embodiments only a third blade is provided, interposed between the at least one first blade and the at least one second blade which are radially non-adjacent.

In the present embodiments and alternatives being disclosed a damper element 14, 14', 14" of the elastomeric type has always been adopted, but the present solutions are also suitable for the use of different types of damper elements such as hydraulic damper elements, adapted to generate a damping through a viscous fluid, or hybrid elements dampers, i.e. adopting a component of the elastomeric type and one of the hydraulic type.

The present invention further relates to a helicopter comprising a fuselage, at least one engine element and at least one rotor 1 having the above-mentioned features, the helicopter thus having improved features in terms of damping and stability with respect to what is ensured by the currently available prior art.

Industrial applicability

The present invention finds an immediate application in particular for helicopters with multi-blade main and/or tail rotor, with more than 3 blades, which represent about 50% of the market, in number of helicopters, and up to 80% in value. Examples are represented by helicopters from medium-light upwards like Leonardo AW109, AW119, AW139, AW169, AW189, AW101, Airbus H135, H145, H160, H175, H215, H225.

Advantageously, the present invention allows a damping to be inserted in a new way in connection with the drag movement of the rotor blades, that is the rotation thereof with respect to the hub about an axis which is parallel to the rotation axis of the rotor itself, maximizing it for the movements requiring it and minimizing it or making it void for those not requiring it.

More specifically, the damping element according to the present invention is stressed by the relative movement between non-adjacent blades and, therefore, the damping amount associated with movements which involve a substantial displacement of the overall centre of mass of the rotor is maximized.

At the same time, the damping associated with movements which do not involve a displacement of the overall centre of mass of the rotor is minimized or even made void.

In other words, by using this solution damping is directed only where necessary thus getting an advantage in terms of efficacy of the component since the damping action would act only where necessary.

Therefore, in the articulated or so-called "soft-inplane" rotors dynamic instability phenomena occurring when the centre of mass of the rotor moves transversely with respect to the rotation axis are prevented, resulting in a harmful interaction between the movement of the aircraft body and that of the rotor. The displacement only occurs for suitable combinations of the movement of the blades.

Thus, advantageously, it is possible to obtain the required damping with smaller and lighter damping elements.

Still advantageously, there is a reduction of the stresses inside the damping elements themselves and there is a reduction of the stresses that the latter release on the hub and blades, with benefits for the efficiency and lightness of the design thereof and the fatigue life thereof and thus resulting in a structural reduction.

Hence, a further advantage of the present invention is also given in terms of maintenance periods since, due to the lower effort undergone by the component, less stop sessions are necessary to control the relevant operation.

Moreover, better features of tolerance of the damage or wear of the damping elements with regard to the dynamic stability of the aircraft are ensured.

Still advantageously, the residual stability provided by the proposed solution, in case of failure or wear of some of the damping elements, is higher.

Furthermore, the present invention is optimum from the design, construction and use point of view having a complexity and risks which are comparable to those of the currently used solutions.

Still a further advantage of the present invention is given by the possibility to generate the geometry of the component which is suitable for pre-existing rotors.

Finally, advantageously the present solution is suitable for a large-scale production.

The here-described embodiments are hence to be understood as illustrative and non-limiting examples of the invention.

**Claims**

1. Rotor (1, 1', 1", 1‴, 1⁗, 1‴‴") for helicopter comprising:

   - a shaft (2) adapted to be put into rotation by at least one engine element;
   - a hub (3) splined to said shaft (2);
   - at least four blades (4) radially connected to said hub (3) and rotationally movable thereabout;
   - at least one damping connection assembly (9, 9', 9", 9‴) provided between at least one first blade and at least one second blade of said at least four of blades (4), said at least one first blade and said at least one second blade being radially non-adjacent, wherein radially non-adjacent means that said at least one first blade and said at least one second blade define each a radius of said rotor and said rotor comprise at least one third blade interposed between said at least one first blade and said at least one second blade which defines a third radius of said rotor;

   said at least one damping connection assembly (9, 9', 9", 9‴) comprising:

   - at least one upper connection rod (10) arranged above said hub (3) and connected to said first blade at a first end (11) of said at least one damping connection assembly (9, 9', 9", 9‴),
   - at least one lower connection rod (12) arranged below said hub (3) and connected to said second blade at a second end (13) of said at least one damping connection assembly (9, 9', 9", 9‴),
   - and at least one damper element (14, 14', 14") interposed between said first end (11) and said second end (13).

2. Rotor (1, 1', 1⁗, 1‴‴") for helicopter according to claim 1, wherein said at least one damper element (14, 14') comprises a rotary damper, configured to generate a damping through a rotation by a fixed angle.

3. Rotor (1, 1') for helicopter according to claim 2, further comprising a plurality of bearings (20') located between said hub (3) and said at least one damper element (14, 14') and configured to allow a rotation of said damper element (14, 14').

4. Rotor (1", 1‴, 1⁗, 1‴‴") for helicopter according to any one of claims 1 to 3, wherein said at least one damper element (14") comprises a linear damper, configured to generate a damping by extension and compression.

5. Rotor (1, 1', 1", 1‴, 1⁗, 1‴‴") for helicopter according to claim 4, wherein one of said at least one upper connection rod (10) or said at least one lower connection rod (12) comprises said linear damper element (14").

6. Rotor (1", 1‴, 1⁗, 1‴‴") for helicopter according to claim 4 or 5, further comprising a rotating body (19", 19‴) adapted to act as a rigid transmission element and a plurality of bearings (20") located between said rotating body (19", 19‴) and said hub (3) configured to allow a rotation of said rotating body (19", 19‴).

7. Rotor (1, 1', 1", 1‴, 1⁗, 1⁗') for helicopter according to any one of claims 1 to 6, wherein said at least one damper element (14, 14', 14") comprises at least one elastomeric element adapted to generate a damping by deformation.

8. Rotor (1, 1', 1", 1‴, 1⁗, 1⁗') for helicopter according to any one of claims 1 to 6, wherein said at least one damper element comprises at least one hydraulic element adapted to generate a damping through a viscous fluid.

9. Rotor (1, 1', 1", 1‴, 1⁗, 1⁗') for helicopter according to any one of claims 1 to 8, comprising four blades or five blades or six blades.

10. Rotor (1, 1', 1", 1‴, 1⁗, 1⁗') for helicopter according to claim 9 wherein only a third blade is provided, interposed between said at least one first blade and said at least one second blade which are radially non-adjacent.

11. Helicopter comprising a fuselage, at least one engine element, and at least one rotor for helicopter (1, 1', 1", 1‴, 1⁗, 1⁗') according to any one of claims 1 to 10.

## Patentansprüche

1. Rotor (1, 1', 1", 1‴, 1⁗, 1⁗') für einen Helikopter, der Folgendes umfasst:

   - eine Welle (2), die ausgelegt ist, durch mindestens ein Kraftmaschinenelement in Drehung versetzt zu werden;
   - eine Nabe (3), die mit der Welle (2) kerbverzahnt ist;
   - mindestens vier Rotorblätter (4), die mit der Nabe (3) radial verbunden sind und um diese rotatorisch beweglich sind;
   - mindestens eine Dämpfungsverbindungsanordnung (9, 9', 9", 9‴), die zwischen mindestens einem ersten Rotorblatt und mindestens einem zweiten Rotorblatt der mindestens vier Rotorblätter (4) vorgesehen ist, wobei das mindestens eine erste Rotorblatt und das mindestens eine zweite Rotorblatt radial nicht benachbart sind, wobei radial nicht benachbart bedeutet, dass das mindestens eine erste Rotorblatt und das mindestens eine zweite Rotorblatt jeweils einen Radius des Rotors definieren und der Rotor mindestens ein drittes Rotorblatt umfasst, das zwischen dem mindestens einen ersten Rotorblatt und dem mindestens einen zweiten Rotorblatt eingefügt ist, das einen dritten Radius des Rotors definiert;

   wobei die mindestens eine Dämpfungsverbindungsanordnung (9, 9', 9", 9‴) Folgendes umfasst:

   - mindestens eine obere Verbindungsstange (10), die über der Nabe (3) angeordnet ist und an einem ersten Ende (11) der mindestens einen Dämpfungsverbindungsanordnung (9, 9', 9", 9‴) mit dem ersten Rotorblatt verbunden ist,
   - mindestens eine untere Verbindungsstange (12), die unter der Nabe (3) angeordnet ist und an einem zweiten Ende (13) der mindestens einen Dämpfungsverbindungsanordnung (9, 9', 9", 9‴) mit dem zweiten Rotorblatt verbunden ist,
   - und mindestens ein Dämpfungselement (14, 14', 14"), das zwischen dem ersten Ende (11) und dem zweiten Ende (13) eingefügt ist.

2. Rotor (1, 1', 1⁗, 1⁗') für einen Helikopter nach Anspruch 1, wobei das mindestens eine Dämpfungselement (14, 14') einen Drehungsdämpfer umfasst, der konfiguriert ist, durch eine Drehung um einen festgelegten Winkel eine Dämpfung zu erzeugen.

3. Rotor (1, 1') für einen Helikopter nach Anspruch 2, der ferner mehrere Lager (20') umfasst, die zwischen der Nabe (3) und dem mindestens einen Dämpfungselement (14, 14') angeordnet sind und konfiguriert sind, eine Drehung des Dämpfungselements (14, 14') zu ermöglichen.

4. Rotor (1", 1‴, 1⁗, 1⁗') für einen Helikopter nach einem der Ansprüche 1 bis 3, wobei das mindestens eine Dämpfungselement (14") eine geradlinigen Dämpfer umfasst, der konfiguriert ist, durch Ausdehnung und Kompression eine Dämpfung zu erzeugen.

5. Rotor (1, 1', 1", 1‴, 1⁗, 1⁗') für einen Helikopter nach Anspruch 4, wobei entweder die mindestens eine obere Verbindungsstange (10) oder die mindestens eine untere Verbindungsstange (12) das geradlinige Dämpfungselement (14") umfasst.

6.  Rotor (1", 1‴, 1⁗, 1⁗′) für einen Helikopter nach Anspruch 4 oder 5, der ferner einen Drehkörper (19", 19‴), der ausgelegt ist, als ein steifes Übertragungselement zu wirken, und mehrere Lager (20"), die zwischen dem Drehkörper (19", 19‴) und der Nabe (3) angeordnet sind und konfiguriert sind, eine Drehung des Drehkörpers (19", 19‴) zu ermöglichen, umfasst.

7.  Rotor (1, 1', 1", 1‴, 1⁗, 1⁗′) für einen Helikopter nach einem der Ansprüche 1 bis 6, wobei das mindestens eine Dämpfungselement (14, 14', 14") mindestens ein Elastomer-Element umfasst, das ausgelegt ist, durch Verformung eine Dämpfung zu erzeugen.

8.  Rotor (1, 1', 1", 1‴, 1⁗, 1⁗′) für einen Helikopter nach einem der Ansprüche 1 bis 6, wobei das mindestens eine Dämpfungselement mindestens ein Hydraulikelement umfasst, das ausgelegt ist, durch ein zähflüssiges Fluid eine Dämpfung zu erzeugen.

9.  Rotor (1, 1', 1", 1‴, 1⁗, 1⁗′) für einen Helikopter nach einem der Ansprüche 1 bis 8, der vier Rotorblätter oder fünf Rotorblätter oder sechs Rotorblätter umfasst.

10. Rotor (1, 1', 1", 1‴, 1⁗, 1⁗′) für einen Helikopter nach Anspruch 9, wobei lediglich ein drittes Blatt vorgesehen ist, das zwischen dem mindestens einen ersten Rotorblatt und dem mindestens einen zweiten Rotorblatt eingefügt ist, die radial nicht benachbart sind.

11. Helikopter, der einen Rumpf, mindestens ein Kraftmaschinenelement und mindestens einen Rotor (1, 1', 1", 1‴, 1⁗, 1⁗′) für einen Helikopter nach einem der Ansprüche 1 bis 10 umfasst.

**Revendications**

1.  Rotor (1, 1', 1", 1‴, 1⁗, 1⁗′) pour hélicoptère comprenant :

    - un arbre (2) adapté pour être mis en rotation par au moins un élément moteur ;
    - un moyeu (3) emboîté sur ledit arbre (2) ;
    - au moins quatre pales (4) radialement raccordées audit moyeu (3) et mobiles en rotation autour de ce dernier ;
    - au moins un ensemble de raccordement d'amortissement (9, 9', 9", 9‴) prévu entre au moins une première pale et au moins une deuxième pale desdites au moins quatre pales (4), ladite au moins une première pale et ladite au moins une deuxième pale étant radialement non adjacentes, dans lequel radialement non adjacentes signifie que ladite au moins une première pale et ladite au moins une deuxième pale définissent chacune un rayon dudit rotor et ledit rotor comprend au moins une troisième pale intercalée entre ladite au moins une première pale et ladite au moins une deuxième pale qui définit un troisième rayon dudit rotor ;

    ledit au moins un ensemble de raccordement d'amortissement (9, 9', 9", 9‴) comprenant :

    - au moins une tige de raccordement supérieure (10) agencée au-dessus dudit moyeu (3) et raccordée à ladite première pale au niveau d'une première extrémité (11) dudit au moins un ensemble de raccordement d'amortissement (9, 9', 9", 9‴),
    - au moins une tige de raccordement inférieure (12) agencée au-dessous dudit moyeu (3) et raccordée à ladite deuxième pale au niveau d'une deuxième extrémité (13) dudit au moins un ensemble de raccordement d'amortissement (9, 9', 9", 9‴),
    - et au moins un élément amortisseur (14, 14', 14") intercalé entre ladite première extrémité (11) et ladite deuxième extrémité (13).

2.  Rotor (1, 1', 1⁗, 1⁗′) pour hélicoptère selon la revendication 1, dans lequel ledit au moins un élément amortisseur (14, 14') comprend un amortisseur rotatif configuré pour générer un amortissement par le biais d'une rotation selon un angle fixe.

3.  Rotor (1, 1') pour hélicoptère selon la revendication 2, comprenant en outre une pluralité de paliers (20') positionnés entre ledit moyeu (3) et ledit au moins un élément amortisseur (14, 14') et configurés pour permettre une rotation dudit élément amortisseur (14, 14').

4.  Rotor (1, 1‴, 1⁗, 1⁗′) pour hélicoptère selon l'une quelconque des revendications 1 à 3, dans lequel ledit au moins un élément amortisseur (14") comprend un amortisseur linéaire, configuré pour générer un amortissement par extension et compression.

5. Rotor (1, 1', 1", 1‴, 1⁗, 1″″′) pour hélicoptère selon la revendication 4, dans lequel l'une parmi ladite au moins une tige de raccordement supérieure (10) ou ladite au moins une tige de raccordement inférieure (12) comprend ledit élément amortisseur linéaire (14").

6. Rotor (1", 1‴, 1⁗, 1″″′) pour hélicoptère selon la revendication 4 ou 5, comprenant en outre un corps rotatif (19", 19‴) adapté pour servir d'élément de transmission rigide et une pluralité de paliers (20") positionnés entre ledit corps rotatif (19", 19‴) et ledit moyeu (3) configuré pour permettre une rotation dudit corps rotatif (19", 19‴).

7. Rotor (1, 1', 1", 1‴, 1⁗, 1″″′) pour hélicoptère selon l'une quelconque des revendications 1 à 6, dans lequel ledit au moins un élément amortisseur (14, 14', 14") comprend au moins un élément élastomère adapté pour générer un amortissement par déformation.

8. Rotor (1, 1', 1", 1‴, 1⁗, 1″″′) pour hélicoptère selon l'une quelconque des revendications 1 à 6, dans lequel ledit au moins un élément amortisseur comprend au moins un élément hydraulique adapté pour générer un amortissement par le biais d'un fluide visqueux.

9. Rotor (1, 1', 1", 1‴, 1⁗, 1″″′) pour hélicoptère selon l'une quelconque des revendications 1 à 8, comprenant quatre pales ou cinq pales ou six pales.

10. Rotor (1, 1', 1", 1", 1⁗, 1″″′) pour hélicoptère selon la revendication 9, dans lequel on ne prévoit qu'une troisième pale intercalée entre ladite au moins une première pale et ladite au moins une deuxième pale qui sont radialement non adjacentes.

11. Hélicoptère comprenant un fuselage, au moins un élément moteur et au moins un rotor (1, 1', 1", 1‴, 1⁗, 1″″′) pour hélicoptère selon l'une quelconque des revendications 1 à 10.

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

**FIG. 20**

**FIG. 21**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1767452 B1
- US 20180002006 A1
- CH 711754 A2
- US 3361216 A